# EUROPÄISCHE PATENTSCHRIFT

(11) **EP 1 273 818 B1**
(45) Veröffentlichungstag und Bekanntmachung des Hinweises auf die Patenterteilung: **27.09.2006**
(21) Anmeldenummer: 02012960.7
(22) Anmeldetag: 12.06.2002
(51) Int. Cl.: F16D 69/02, C04B 35/573, C04B 35/80

(54) **Bremssystem mit Verbundwerkstoff Bremsscheibe**
Brake system with composite brake disc
Système de freinage avec disque en materiau composite

(30) Priorität: 30.06.2001 DE 10131769
(43) Veröffentlichungstag der Anmeldung: 08.01.2003
(73) Patentinhaber: AUDI AG, 85045 Ingolstadt (DE)
(72) Erfinder: Bauer, Moritz, Dipl.-Ing., 86153 Augsburg (DE); Gruber, Udo, Dipl.-Ing., 86356 Neusäss (DE); Heine, Michael, Dr., 86695 Allmannshofen (DE); Kienzle, Andreas, Dr., 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 0 887 572
- EP-A- 1 084 997
- DE-A- 19 727 585

## Beschreibung

Die Erfindung betrifft ein Bremssystem umfassend eine Reibpaarung aus organisch oder anorganisch gebundenen Metall- oder Sintermetall-haltigen, und/oder CFC-haltigen Bremsbelägen und eine Bremsscheibe aus faserverstärktem Keramikverbundwerkstoff aus C/SiC.

Als "CFC" oder C/C (englisch "CFRC", carbon fibre reinforced carbon) werden mit Kohlenstoffasern und/oder Graphitfasern verstärkte Werkstoffe bezeichnet, deren Matrix im Wesentlichen aus Kohlenstoff besteht. "C/SiC" sind mit Kohlenstoffasern und/oder Graphitfasern verstärkte Werkstoffe, deren Matrix zum überwiegenden Teil aus Siliciumcarbid besteht.

Aus den Schriften DE-C 197 11 829 und DE-A 197 10 105 ist bekannt, wie sich für Bremsscheiben geeignete Verbundwerkstoffe aus mit Kohlenstoff-haltigen Fasern und Faserstoffbündeln verstärktem C/SiC über den sogenannten Flüssigsilizierprozeß herstellen lassen. Diese Verbundwerkstoffe werden erzeugt, indem poröse Kohlenstoffaser- und/oder Graphitfaser-verstärkte Kohlenstoff-Verbundkörper (C/C) mit einer Siliciumschmelze infiltriert werden. Hierbei setzt sich ein Anteil des freien Kohlenstoffs und der kohlenstoffhaltigen Fasern zu Siliciumcarbid um, wodurch eine dichte keramische Matrix aus SiC und Si gebildet wird. Das Brems- und Verschleißverhalten des Bremssystems wird im Wesentlichen durch die Abstimmung der Werkstoffeigenschaften der reibenden Flächen der Bremsscheibe, oder der Reibfläche oder des Reibringes einerseits und des Bremsbelages andererseits beeinflußt.

In der DE-A 197 27 586 (EP-A 0 887 572) wird eine Kombination aus einer C/SiC-Bremsscheibe und einem dazu korrespondierenden C/SiC-Bremsbelag beschrieben, bei dem der C/C-Vorkörper der Bremsscheibe eine geringere Dichte aufweist als die oberflächennahen Bereiche des C/C-Vorkörpers des Bremsbelages. Vor allem aufgrund der hohen Härte beider Reibpartner ist das Reib- und Verschleißverhalten jedoch noch nicht befriedigend.

Aus der DE-A 197 27 585 ist eine Kombination aus einer kurzfaserverstärkten C/SiC-Keramikbremsscheibe und einem Bremsbelag aus einem Sintermetallwerkstoff, oder einem anorganisch gebundenen Werkstoff mit keramischer Binderphase und Metallpartikeln bekannt. Hierbei wird die Bremsbelagszusammensetzung auf den gegebenen C/SiC-Werkstoff in der Weise angepaßt, daß der Belag thermisch hochbelastbar ist. Auch dieses System zeigt sich hinsichtlich Bremsverhalten und Verschleiß insbesondere der Bremsscheibe als noch unbefriedigend.

Aus der DE-A 44 38 456 ist bekannt, daß innerhalb einer Bremsscheibe aus C/C und/oder C/SiC unterschiedliche Anforderungen an die mechanische Festigkeit und die Reibeigenschaften des keramischen Werkstoffes gestellt werden. Darin wird daher vorgeschlagen, die Bremsscheibe in einen mechanisch festen Kernkörper oder Tragkörper und einen fest damit verbundenen Reibkörper mit auf die Reibeigenschaften angepaßten Eigenschaften zu aufzuteilen.

Aus der EP-A 0 818 636 sind Fahrzeugbremsscheiben aus einem C-C/C/SiC-Werkstoff bekannt, die eine SiC-Beschichtung über eine Tauchbad- oder Vakuumimprägnierung erhalten.

Die DE-C 198 34 018 lehrt die Herstellung von Verschleißschutzschichten, wobei die Schutzschichten nicht aus reinem SiC bestehen, sondern zusätzlich freies Silicium enthalten, bevorzugt in einem Massenanteil im Bereich von 50 % bis 90 %, bezogen auf die Masse der Schutzschicht. Die Schutzschicht wird durch die Infiltration poröser Kohlenstoffoberflächenschichten auf keramischen Verbundwerkstoffen, wie C/C, C/C-SiC, mit Silicium hergestellt. Die beschriebene Schutzschichten bewirken zwar eine Minderung von Verschleiß, Abrasion und Korrosion, nachteilig bei dieser Zusammensetzung der Schutzschicht ist aber das schlechte Reibverhalten (ungenügende Bremswirkung).

Ein mehrschichtiger Aufbau einer Bremsscheibe mit unterschiedlicher Werkstoff-Zusammensetzung im Kern- und im Oberflächenbereich ist aus diesem Stand der Technik nicht bekannt. Es gibt auch keine Hinweise darauf, daß zur Erzielung einer guten Bremswirkung ein Mindestgehalt an SiC in der Reibfläche und ein Maximalgehalt an Silicium eingehalten werden müssen.

Gegenüber dem Stand der Technik ist es Aufgabe der Erfindung, Bremssysteme bereitzustellen mit Bremsbelägen aus metall- oder sintermetallhaltigen Werkstoffen oder CFC-haltigen Werkstoffen und Bremsscheiben aus C/SiC-Werkstoffen, die eine sowohl hinsichtlich ihrem Reibverhalten als auch der Standzeit verbesserte Reibschicht besitzen.

Die Erfindung betrifft daher Bremssysteme umfassend eine Reibpaarung aus Metall- oder Sintermetall-haltigen und/oder CFC-haltigen Bremsbelägen und einer Bremsscheibe aus faserverstärktem Keramikverbundwerkstoff aus C/SiC, dadurch gekennzeichnet, daß die Reibschicht und/oder die der Reibung ausgesetzte Oberflächenschicht der Bremsscheibe einen SiC-Anteil oberhalb von 65% besitzt, und daß die Werkstoff-Zusammensetzungen im Kern- und Oberflächenbereich der Bremsscheibe unterschiedlich sind.

Als unterschiedlich werden solche Werkstoff-Zusammensetzungen bezeichnet, die bei gleicher qualitativer Zusammensetzung sich in dem Massenanteil mindestens einer Komponente um mehr als 0,01 (1 % bezogen auf die Gesamtmasse des Werkstoffs) unterscheiden. Bei unterschiedlicher qualitativer Zusammensetzung ist es erforderlich, daß mindestens eine Komponente in einem Massenanteil von mindestens 0,5 % der Gesamtmasse des Werkstoffs in nur einer der unterschiedlichen Zusammensetzungen gegenwärtig ist.

Die Reibscheibe oder Bremsscheibe ist aus C/SiC aufgebaut und besitzt eine Reibschicht und/oder eine Oberflächenschicht auf der Reibfläche, welche einen SiC-Gehalt über 65 % und einen Si-Gehalt unterhalb von 25 % besitzt, wobei das restliche Material überwiegend aus Kohlenstoff besteht. Bevorzugt wird eine Zusammensetzung mit einem SiC-Gehalt von über 70 % und besonders bevorzugt im Bereich von 80 bis 99 % gewählt. Der Gehalt an freiem Silicium liegt dann bevorzugt bei unterhalb von 20 % und besonders bevorzugt unterhalb von 9%. Alle mit der Einheit "%" angegebenen Gehalte sind Massenanteile (in g / 100 g bzw. cg/g), soweit nichts anderes ausdrücklich gesagt ist.

Zur Herstellung der Bremsscheibe aus C/SiC werden in bekannter Weise zunächst CFC-Formkörper als Grünlinge hergestellt. Die Faserverstärkung des CFC kann sowohl mit Langfasem, als auch mit Kurzfasern in Form von Geweben, Matten, Filzen oder Bündeln, insbesondere mit durch eine Kohlenstoffmatrix gebundene Kurzfaserbündel erfolgen. Dabei werden typischerweise kohlenstoffhaltige Fasern, bevorzugt beschichtete Kohlenstoff- oder Graphitfasern und Fasern aus dem Werkstoffsystem Si/C/B/N eingesetzt. Im allgemeinen werden Fasern eingesetzt, die mit kohlenstoffhaltigen pyrolysierbaren organischen Pechen und Harzen oder metallorganischen Harzen oder über die Gasphase beschichtet wurden. Für die Herstellung von Faserbündeln, sowie für die Nachverdichtung der kohlenstoffhaltigen Grünlinge und CFC können organische Peche und Harze, gegebenenfalls mit Additiven aus weiteren Metall- oder Halbmetall-Verbindungen, durch Flüssigimprägnierung, aufgebracht, oder Kohlenstoff kann aus der Gasphase abgeschieden werden.

Bei dem Aufbau der Bremsscheibe wird die Zusammensetzung des CFC-Vorkörpers bevorzugt so gewählt, daß die mittlere Schicht der Scheibe, die den Tragkörper (Kernbereich) bilden wird, die dafür erforderliche mechanische Festigkeit erhält. Daher wird hier ein Massenanteil von mindestens 10 % der kohlenstoffhaltigen Fasern bevorzugt. Die der (späteren) Reibschicht entsprechende CFC-Schicht, welche zusammen mit dem Tragkörper oder auch separat gefertigt werden kann, muß einen dem gewünschten späteren SiC-Gehalt angemessenen Kohlenstoffgehalt aufweisen. Für die Reibschicht ist es dabei nicht unbedingt notwendig, Kohlenstoff als faserförmiges Material einzusetzen. Aus der kohlenstoffhaltigen Schicht der Reibzone entsteht in diesem Fall eine C-Faserfreie Schicht.

Nach der Fertigstellung des scheibenförmigen Formkörpers aus einem oder mehreren Grünlingen des Tragkörpers und der Reibschicht wird die Scheibe bei Temperaturen oberhalb 1420 °C durch Infiltration mit einer Siliciumschmelze siliziert. Dabei wandelt sich in bekannter Weise zumindest ein Teil des Kohlenstoffs durch chemische Reaktion in Siliciumcarbid um. Die Zusammensetzungen des C/SiC werden in der Bremsscheibe so eingestellt, daß der SiC-Gehalt der Tragzone geringer ist als in der Reibschicht. Typischerweise liegt dieser Gehalt in der Tragzone unterhalb von 65 % (bzw. unterhalb von 70 %, falls die Reibschicht frei von kohlenstoffhaltigen Fasern ist) und besonders bevorzugt unterhalb von 60 %. Unter den Begriff des C/SiC-Werkstoffes, sowohl des Tragringes als auch der Reibschicht, fallen erfindungsgemäß ebenfalls Werkstoffvarianten, deren Siliciumphasen der Matrix, also der Anteil der Matrix, der nicht SiC oder Kohlenstoff enthält, auch weitere Metalle oder Halbmetalle in Massenanteilen von bis zu 50 % aufweisen können, bezogen auf die Masse der "Siliciumphase". Als Siliciumphase wird im folgenden auch zusammenfassend bezeichnet, wenn die Metalle oder Halbmetalle der Matrix im Si gelöst, als Si-Legierung, als Ausscheidung im Si, als diskrete Si-Verbindung, oder weitgehend seperate Phase auftreten. Typischerweise werden diese Metalle-, oder Halbmetalle bei der Flüssigsilizierung als Legierungsbestandteile des Siliciums in den Verbundwerkstoff eingebracht und reichem sich in den Siliciumphasen des Werkstoffes an. Zu den Metallen zählen typischerweise Mo, Ni, Cr, Ti, Fe, Cu, Al und B. Da sich die Reibschicht während der verschleißenden Beanspruchung abträgt, ist hier unter der Reibschicht die gesamte Werkstoffschicht zu verstehen, welche mindestens innerhalb der Lebensdauer einer Bremsscheibe dem Reibbelag bzw. Bremsbelag gegenüberliegt und mit diesem tribologisch zusammenwirkt. Die Dicke der Reibschicht ist daher vor der verschleißenden Beanspruchung typischerweise größer als 0,5 mm, und bevorzugt größer als 1 mm und besonders bevorzugt größer als 2,5 mm.

Die Bremsbeläge, die als Bestandteil des Bremssystems mit den Bremsscheiben zusammenwirken, können durch Pressen und anschließende Wärmebehandlung oder Sintern hergestellt werden. Dabei werden Mischungen hergestellt aus Metallen, insbesondere Partikel oder Pulver, und/oder Fasern und/oder Whisker, Kohlenstoffpartikeln, insbesondere Pulver und/oder Fasern, und gegebenenfalls Partikeln, insbesondere Pulvern und/oder Fasern und/oder Whisker, aus Hartstoffen insbesondere ausgewählt aus Carbiden, Nitriden, Boriden und Siliciden von Metallen der 4. bis 6. Nebengruppe der Periodensystems (Ti, Zr, Hf, V, Nb, Ta, Cr, Mo, W), Borcarbid, kubisches Bornitrid, Siliciumcarbid und Aluminiumoxid.
Unter den Metallen werden Eisen und Eisenlegierungen, Bronze, Silicium, Ferrosilicium und Kupfer bevorzugt. Gegebenenfalls können auch Schmiermittel- wie Graphit oder Molybdänsulfid der Mischung zugesetzt werden. Die Mischungen werden teils unter Zusatz von organischen Bindemitteln, die beim Erhitzen pyrolysieren, wie zum Beispiel Pech, oder Phenolharzen homogenisiert, teils unter Zusatz von anorganischen Bindern in die gewünschte Form gepreßt. Durch Erhitzen auf Temperaturen von ca. 200°C, vorzugsweise für organische Binder, und bis zu ca. 1400 °C, vorzugsweise für anorganische Binder, vorzugsweise unter Ausschluß von (Luft-) Sauerstoff, druckloses Sintern oder Sintern unter Druck und Abkühlen werden die Bremsbeläge in ihrer endgültigen Zusammensetzung und Struktur zugänglich. Zu den anorganischen Bindern gehören insbesondere auch metallorganische Polymere oder Keramikprecursoren, die pyrolytisch zu keramischen Bindern zersetzt werden, wie zum Beispiel Polysiloxane, Polysilane oder Carbosilane.
Geeignete Beläge werden beispielsweise in der DE 197 11 830 beschrieben, deren Offenbarung durch die Bezugnahme aufgenommen wird.
Reibpaarungen mit den Bremsscheiben gemäß der Erfindung weisen ein weitgehend konstantes Reibwertverhalten bei hohen Reibwerten über einen großen Temperatur- und Geschwindigkeitsbereich auf. Besonders vorteilhaft ist der geringe Materialabtrag der Reibschicht und die daraus resultierende hohe Lebensdauer der Scheibe.

Die erfindungsgemäß bereitgestellten Bremssysteme lassen sich in Kraftfahrzeugen, Schienenfahrzeugen und Flugzeugen mit Vorteil anwenden.

### Beispiel 1:

Zur Herstellung der erfindungsgemäßen Bremsscheibe werden zunächst Kohlenstofffaserbündel hergestellt. Hierzu werden Kohlenstofffasem auf PAN-Basis mit Phenolharz getränkt und auf 130°C erhitzt um Prepregs herzustellen. Die Prepregs werden übereinandergelegt, zu Faserplatten verpresst und bei 900°C gebrannt. Hierauf wird dreimal mit Steinkohlenteerpech nachverdichtet und bei 900°C gebrannt, wobei nach der letzten Nachverdichtung abschließend bei 2000°C graphitiert wird. Der so erhaltene CFC-Körper wird zerkleinert und in mittels Siebung fraktioniert. Die hieraus gewonnenen Fraktionen dienen als Faserbündel für die Herstellung von Tragkörper und Reibschicht.
Für den Tragkörper wird eine Mischung aus 70% der Gesamtmasse Faserbündel der Längenverteilung 70% < 10,5mm und 30% 10,5 bis 20mm, 20% der Gesamtmasse Phenolharz und 10% der Gesamtmasse Steinkohlenteerpech hergestellt. Die Mischung wird hierauf zu einem der Tragkörpergeometrie entsprechenden Formkörper verpresst und bei einer Temperatur von 130°C gehärtet.
Für die korrespondierende Reibschicht wird eine Mischung aus 70% der Gesamtmasse Faserbündel mit der Längenverteilung 50% < 0,5mm und 50% 0,5 bis 1mm und 30% der Gesamtmasse Phenolharz. Die Mischung wird mit weiteren Additiven und Lösungsmittel in einem Mischer granuliert und hierauf zu Scheiben einer Dicke von 5mm verpresst und bei ca. 130°C ausgehärtet.
Die Reibschicht wird mit einer faserhaltigen Masse auf den Tragkörper geklebt und der so erhaltene Bremsscheibenvorkörper bei 900°C carbonisiert bzw. pyrolysiert. Anschließend erfolgt eine Siliziuminfiltration bei 1700°C im Vakuum.

Der hierdurch in der Reibschicht erzeugte SiC-Gehalt liegt oberhalb 68%. Der Reibwert gegen organisch gebundene Reibbeläge liegt im Bereich von µ=0,45-0,5. Mit anorganisch gebundenen Belägen weisen die Reibwerte auch bei hohen Temperaturen einen sehr konstanten Bereich auf.

### Beispiel 2:

Zur Herstellung der Faserbündelfraktionen und des Tragringes wird zunächst wie in Beispiel 1 beschrieben vorgegangen. Um den SiC-Gehalt der Reibschicht weiter zu erhöhen wird im Gegensatz zum Beispiel 1 eine Reibschichtmischung aus 56% der Gesamtmasse Faserbündel mit der Längenverteilung 50% < 0,5mm und 50% 0,5 bis 1mm und 14% der Gesamtmasse Graphitpulver und 30% der Gesamtmasse Phenolharz hergestellt. Hierauf wird analog zum Beispiel 1 verfahren.
Der hierdurch in der Reibschicht erzeugte SiC-Gehalt liegt oberhalb 70%. Der Reibwert gegen organisch gebundene Reibbeläge liegt im Bereich von µ=0,4-0,45. Mit anorganisch gebundenen Belägen weisen die Reibwerte auch bei hohen Temperaturen einen sehr konstanten Bereich auf.

### Beispiel 3:

Zur Herstellung der Faserbündelfraktionen und des Tragringes wird zunächst wie in Beispiel 1 beschrieben vorgegangen. Um den SiC-Gehalt der Reibschicht weiter zu erhöhen wird im Gegensatz zum Beispiel 1 eine Reibschichtmischung aus 70% der Gesamtmasse Faserbündel mit der Längenverteilung < 0,5mm und 30% der Gesamtmasse Phenolharz hergestellt. Hierauf wird analog zum Beispiel 1 verfahren.
Der hierdurch in der Reibschicht erzeugte SiC-Gehalt liegt oberhalb 90%. Der Reibwert liegt im Bereich von µ=0,35-0,4. Mit anorganisch gebundenen Belägen weisen die Reibwerte auch bei hohen Temperaturen einen sehr konstanten Bereich auf.

## Patentansprüche

1. Bremssystem umfassend eine Reibpaarung aus organisch oder anorganisch gebundenen Metall- oder Sintermetall-haltigen und/oder CFC-haltigen Bremsbelägen und eine Bremsscheibe aus faserverstärktem Keramikverbundwerkstoff aus C/SiC mit Tragkörper und mindestens einer Reibschicht, **dadurch gekennzeichnet, daß** die Reibschicht der Bremsscheibe einen SiC-Anteil oberhalb von 65 % besitzt, und daß die Werkstoff-Zusammensetzungen in Tragkörper und Reibschicht der Bremsscheibe unterschiedlich sind.

2. Bremssystem nach Anspruch 1, **dadurch gekennzeichnet, daß** die Reibschicht und/oder die der Reibung ausgesetzte Oberflächenschicht der Bremsscheibe einen SiC-Anteil oberhalb von 70 % und einen Si-Gehalt unterhalb von 30 % besitzt, wobei das restliche Material überwiegend aus Kohlenstoff besteht.

3. Bremssystem nach Anspruch 1 oder 2, **dadurch gekennzeichnet, daß** der SiC-Gehalt der Reibschicht der Bremsscheibe über 80 % liegt.

4. Bremssystem nach Anspruch 1 oder 2, **dadurch gekennzeichnet, daß** der Si-Gehalt der Reibschicht der Bremsscheibe unter 25 % liegt.

5. Bremssystem nach einem oder mehreren der Ansprüche 1 bis 4, **dadurch gekennzeichnet, daß** die Siliciumphasen des C/SiC-Verbundwerkstoffes des Kern und/oder Oberflächenbereiches der Bremsscheibe bis zu 50 % an von Si verschiedenen Metallen oder Halbmetallen enthalten.

6. Bremssystem nach Anspruch 5, **dadurch gekennzeichnet, daß** als Metalle oder Halbmetalle Mo, Ni, Cr, Ti, Fe, Cu, Al und B verwendet werden.

7. Bremssystem nach einem oder mehreren der Ansprüche 1 bis 6, **dadurch gekennzeichnet, daß** die Dicke der Reibschicht der Bremsscheibe größer als 0,5 mm ist.

8. Bremssystem nach Anspruch 1 oder 2, **dadurch gekennzeichnet, daß** der SiC-Gehalt im Reibring und/oder in der der Reibung ausgesetzten Oberflächenschicht der Bremsscheibe im Bereich von 81 bis 99 % liegt.

9. Verwendung des Bremssystems nach einem oder mehreren der Ansprüche 1 bis 8 zum Bremsen von Kraftfahrzeugen, Schienenfahrzeugen oder Flugzeugen.

## Claims

1. A brake system comprising a friction pairing of organically or inorganically bonded metal- or sintered-metal-containing and/or CFRC-containing brake linings and a brake disc of fibre-reinforced ceramic composite material of C/SiC having a supporting body and at least one friction layer, **characterised in that** the friction layer of the brake disc has an SiC fraction of over 65%, and **in that** the material compositions in the supporting body and friction layer of the brake disc are different.

2. A brake system according to claim 1, **characterised in that** the friction layer and/or the surface layer of the brake disc exposed to friction has an SiC fraction of over 70% and an Si content of under 30%, wherein the remaining material consists predominantly of carbon.

3. A brake system according to claim 1 or claim 2, **characterised in that** the SiC content of the friction layer of the brake disk is over 80%.

4. A brake system according to claim 1 or claim 2, **characterised in that** the Si content of the friction layer of the brake disk is under 25%.

5. A brake system according to one or more of claims 1 to 4, **characterised in that** the silicon phases of the C/SiC composite material of the core and/or surface area of the brake disc contain up to 50% of metal or semimetals other than Si.

6. A brake system according to claim 5, **characterised in that** Mo, Ni, Cr, Ti, Fe, Cu, Al and B may be used as metals or semimetals.

7. A brake system according to one or more of claims 1 to 6, **characterised in that** the thickness of the friction layer of the brake disc is greater than 0.5 mm.

8. A brake system according to claim 1 or claim 2, **characterised in that** the SiC content in the friction ring and/or in the surface layer of the brake disc exposed to friction is in the range of from 81 to 99%.

9. Use of the brake system according to one or more of claims 1 to 8 for braking motor vehicles, rail vehicles or aircraft.

## Revendications

1. Système de freinage présentant un couple de frottement constitué de garnitures de frein contenant du métal ou du métal fritté et / ou du CFC, assemblées par voie organique ou inorganique, et un disque de frein constitué de matière composite céramique renforcée par des fibres en C/SiC, comportant un corps de support et au moins une couche de frottement, **caractérisé en ce que** la couche de frottement du disque de frein a une teneur en SiC supérieure à 65 %, et **en ce que** les compositions des matières dans le corps de support et dans la couche de frottement du disque de frein sont différentes.

2. Système de freinage selon la revendication 1, **caractérisé en ce que** la couche de frottement et / ou la couche superficielle soumise au frottement du disque de frein a une teneur en SiC supérieure à 70 % et une teneur en Si inférieure à 30 %, sachant que le reste de la matière est essentiellement constitué de carbone.

3. Système de freinage selon l'une quelconque des revendications 1 ou 2, **caractérisé en ce que** la teneur en SiC de la couche de frottement du disque de frein est supérieure à 80 %.

4. Système de freinage selon l'une quelconque des revendications 1 ou 2, **caractérisé en ce que** la teneur en Si de la couche de frottement du disque de frein est inférieure à 25 %.

5. Système de freinage selon une ou plusieurs des revendications 1 à 4, **caractérisé en ce que** les phases de silicium de la matière composite C/SiC du noyau et / ou de la zone superficielle du disque de frein contiennent jusqu'à 50 % de métaux ou de semi-métaux différents de Si.

6. Système de freinage selon la revendication 5, **caractérisé en ce qu'**on utilise du Mo, Ni, Cr, Ti, Fe, Cu, Al et B comme métaux ou semi-métaux.

7. Système de freinage selon une ou plusieurs des revendications 1 à 6, **caractérisé en ce que** l'épaisseur de la couche de frottement du disque de frein est supérieure à 0,5 mm.

8. Système de freinage selon l'une quelconque des revendications 1 ou 2, **caractérisé en ce que** la teneur en SiC dans la bague de frottement et / ou dans la couche superficielle soumise au frottement du disque de frein se trouve dans la plage comprise entre 81 et 99 %.

9. Utilisation du système de frein selon une ou plusieurs des revendications 1 à 8 pour le freinage de véhicules, véhicules ferroviaires ou avions.
